# EUROPEAN PATENT APPLICATION

(11) **EP 4 647 162 A1**
(43) Date of publication of application: **12.11.2025**
(21) Application number: 24174977.9
(22) Date of filing: 08.05.2024
(51) Int. Cl.: B01J 35/57, B01J 23/42, H02G 15/10

(54) **OFF-SHORE CATALYSTS FOR A VENTILATED CABLE BOX**

(71) Applicant: Ganemi, Bager, 148 33 Ösmo (SE)
(72) Inventor: Ganemi, Bager, 148 33 Ösmo (SE)
(74) Representative: AWA Sweden AB

(57) **Abstract**

The present disclosure relates to use of a metal-based catalyst supported on a solid substrate, such as platinum supported on a ceramic monolith, for controlling a level of gaseous hydrogen in or in connection to a ventilated cable junction box, wherein said gaseous hydrogen is removed by a hydrogen oxidation reaction catalyzed by said metal-based catalyst. The present disclosure also relates to a method and a system for controlling the level of gaseous hydrogen in or in connection to a ventilated cable junction box.

## Description

### Technical field of the invention

The present invention relates to use of a metal-based catalyst supported on a solid substrate, a method, and a system for controlling a level of gaseous hydrogen in or in connection to a ventilated cable junction box. The junction box may e.g. be present in a marine environment, such as at an off-shore location.

### Background art

Cables are used to transmit electrical power or telecommunication signals from one place to another. A special type of cables are underwater or submarine cables, which are laid on the bottom of large bodies of water, such as lakes, rivers, channels, and oceans. They serve as the lifelines of communication and power transmission, and they are important for industries ranging from telecommunications to off-shore energy production. These cables are specifically designed to operate effectively in the demanding conditions of the marine environment.

One of the problems for underwater cables is the presence and migration of water and gas along the electric cable conductor of these cables. Water and gas may permeate through polymer sheaths and insulation layers of the cables and lead to their premature failure. Gas may also migrate towards the end of the cables and potentially create hazards, such as a loss of electrical insulation due to a pressure buildup at the end of the cables. A particularly problematic gas is hydrogen, which may be generated by galvanic corrosion of metal parts, magnetohydrodynamic effects, and/or microbial activity in the vicinity of the underwater cables. Hydrogen may permeate through the cable insulation and cause optical loss (hydrogen darkening) in said cable. Additionally, any pressure buildup may lead to subsequent sudden release of hydrogen into air and formation of flammable gas mixtures, potentially causing fires and explosions.

The design of the underwater cables has thus been very important, with a special focus on the insulation layers of the cables, cable fillings that may adsorb water and/or hydrogen in the cables, and preventing the pressure buildup at the ends of the cables. However, these solutions often neglect that gas may also migrate to facilities connected to the underwater cables, for example cable junction boxes, and resulting hazards. Examples of such hazards include hydrogen darkening in cables within these facilities, hydrogen accumulation and pressure buildup in the facilities, and potential fires and explosions due to formation of flammable gas mixtures with air/oxygen. Accordingly, there is a need for means, a method, and a system for controlling a level of gaseous hydrogen in or in connection to a cable junction box.

### Summary of the invention

It is an object of the present invention to provide means for controlling a level of gaseous hydrogen in or in connection to the cable junction box.

It is an object of the present invention to provide means for controlling a level of gaseous hydrogen in or in connection to the cable junction box which allows for continuous removal of hydrogen at low concentrations, which in turn prevents hydrogen accumulation therein and formation of flammable gas mixtures, thereby decreasing or eliminating any safety hazards associated with said flammable gas mixtures.

It is also an object of the present invention to provide means for controlling a level of gaseous hydrogen in or in connection to the cable junction box which allows for continuous removal of hydrogen by a catalytic oxidation reaction with limited and low heat generation, which prevents potential ignition of the gaseous hydrogen present therein.

It is an object of the present invention to provide means for controlling a level of gaseous hydrogen in or in connection to the cable junction box which allows for continuous removal of hydrogen by a catalytic oxidation reaction to form water, which is safe to release into air, and thus decreases or eliminates any environmental hazards associated with hydrogen release.

It is a further object of the present invention to provide means for controlling a level of gaseous hydrogen in or in connection to the cable junction box which prevents any pressure buildup therein.

For these and other objects which will be evident from this disclosure, the present invention provides, according to a first aspect, use of a metal-based catalyst supported on a solid substrate for controlling a level of gaseous hydrogen in or in connection to a ventilated cable junction box, wherein said gaseous hydrogen is removed by a hydrogen oxidation reaction catalyzed by said metal-based catalyst.

The inventors have realized that use of the metal-based catalyst supported on the solid substrate for controlling the level of gaseous hydrogen in or in connection to the ventilated cable junction box advantageously achieves
- removal of hydrogen at low concentrations (at ppm levels) and therefore decreasing or preventing formation of flammable gas mixtures
- removal of hydrogen at low concentrations with limited and low heat generation and therefore decreasing risk of ignition of gaseous hydrogen
- removal of hydrogen in the junction box at an atmospheric pressure and therefore decreasing or preventing any pressure buildup
- conversion of hydrogen to water which is safe to release into air and therefore decreases or eliminates release of hydrogen into the atmosphere.

According to a second aspect, there is provided a method of controlling a level of gaseous hydrogen in or in connection to a ventilated cable junction box, comprising a step of removing said gaseous hydrogen by a hydrogen oxidation reaction catalyzed by a metal-based catalyst supported on a solid substrate.

According to a third aspect, there is provided a system for controlling a level of gaseous hydrogen in or in connection to a ventilated cable junction box, wherein said system comprises the ventilation cable junction box and a metal-based catalyst supported on a solid substrate, wherein said ventilated cable junction box is connected to one or more cables, and wherein the metal-based catalyst is arranged in one or more of the following:
i) around the one or more cables,
ii) within the cable junction box, such as in the vicinity of the one or more cables, and/or in the vicinity of at least one outlet for exhaust gases, and/or in the at least outlet for exhaust gases, and
iii) in at least one exhaust tube connected to the at least one outlet for exhaust gases from the cable junction box.

In an embodiment, the level of gaseous hydrogen is controlled below 1000 ppm. In certain embodiments, the level of gaseous hydrogen is controlled below 900 ppm, such as below 800 ppm, such as below 700 ppm, such as below 600 ppm, such as below 500 ppm, such as below 400 ppm, such as below 300 ppm, such as below 200 ppm, such as below 100 ppm. With these low levels of gaseous hydrogen, the risk for ignition is kept low, since a flammable mixture is less likely to occur and since the heat developed by the catalyzed reaction is insignificant.

The junction box may e.g. be present in a marine environment, where gaseous hydrogen is likely to occur in currently uncontrolled amounts. In an embodiment, the cable junction box is connected to one or more cables, such as high-voltage cables, wherein at least one of said cables is partially or fully underwater. In certain embodiments, the one or more cables is selected from one or more of power transmission cables, umbilical cables, or a combination thereof, such as from one or more of high-voltage power transmission cables, umbilical cables containing high-voltage power transmission cables, or a combination thereof.

In an embodiment, the cable junction box is present at an off-shore location, such as an off-shore oil platform or an off-shore wind turbine.

In an embodiment, the cable junction box is at atmospheric pressure and at an ambient temperature, such as between -10 and 50 degrees Celsius, such as between 0 and 30 degrees Celsius. Thereby, an advantageous reaction rate and catalytic efficiency is achieved.

In an embodiment, the metal-based catalyst is arranged in one or more of the following:
i) around the one or more cables,
ii) within the cable junction box, such as in the vicinity of the one or more cables, and/or in the vicinity of at least one outlet for exhaust gases, and/or in the at least one outlet for exhaust gases, and
iii) in at least one exhaust tube connected to the at least one outlet for exhaust gases from the cable junction box.

In an embodiment, the metal-based catalyst is arranged around the one or more cables before the cable junction box or inside the cable junction box.

In an embodiment, the metal-based catalyst is arranged around the one or more cables before said one or more cables have entered the cable junction box. In an embodiment, the metal-base catalyst is arranged around the one or more cables inside the cable junction box.

In an embodiment, the metal-based catalyst is arranged in one or more of the following:
i) around the one or more cables inside the cable junction box;
ii) within the cable junction box, such as in the vicinity of the one or more cables, and/or in the vicinity of at least one outlet for exhaust gases, and/or in the at least one outlet for exhaust gases, and
iii) in at least one exhaust tube connected to the at least one outlet for exhaust gases from the cable junction box.

In an embodiment, the metal-based catalyst comprises at least one catalytically active metal, a compound thereof, or a combination thereof.

In an embodiment, the compound is selected from an oxide of the at least one catalytically active metal, an alloy of the at least one catalytically active metal, and a combination thereof. In some embodiments, the compound is selected from an oxide of the at least one catalytically active metal. By using the compound of the catalytically active metal the amount of the metal is lowered, while its catalytic activity is retained, and thus a cheaper catalytic material is provided.

In an embodiment, the at least one catalytically active metal is selected from at least one catalytically active noble metal, at least one catalytically active non-noble transition metal, and a combination thereof. Such catalysts are typically easily available and are often of low maintenance, resulting in lower operation costs.

In an embodiment, the at least one catalytically active noble metal is selected from one or more of platinum, palladium, rhodium, iridium, ruthenium, osmium, gold, silver, such as from platinum, palladium, or a combination thereof, and wherein the at least one catalytically active non-noble transition metal is selected from one or more of nickel, aluminum, cobalt, copper, cadmium, cerium, vanadium, and chromium.

In an embodiment, the at least one catalytically active metal is selected from at least one catalytically active noble metal, such as from one or more of platinum, palladium, rhodium, iridium, ruthenium, osmium, gold, silver, or such as from platinum, palladium, or a combination thereof. In an embodiment, the at least one catalytically active metal is selected from platinum, palladium, or a combination thereof. In some embodiments, the at least one catalytically active metal is platinum. The catalytically active noble metals are stable and efficient in catalysis of the hydrogen oxidation reaction, even at ppm levels of hydrogen.

In an embodiment, the at least one catalytically active metal is selected from at least one catalytically active non-noble transition metal, such as from one or more of nickel, aluminum, cobalt, copper, cadmium, cerium, vanadium, and chromium. In an embodiment, the at least one catalytically active metal is selected from nickel, aluminum, Raney nickel, cobalt, copper. In an embodiment, the at least one catalytically active metal is selected from cadmium, cerium, vanadium, and chromium. Thereby, the cost of the catalyst is reduced by using less expensive non-noble transition metals.

In an embodiment, the solid substrate has a porous structure, a honeycomb structure, or a combination thereof. Thereby, a large surface of the solid substrate is provided for catalytic materials and a gas diffusion through the solid substrate is enabled.

In an embodiment, the solid substrate has a honeycomb structure. In some embodiments the honeycomb structure has channels, wherein said channels are circular, square, sinusoidal, and/or hexagonal. In some embodiments, said channels are hexagonal. In some embodiments, said channels are square. In some embodiments, the diameter of channels is below or equal to 0.5 cm. In some embodiments, the diameter of channels in equal or above to 0.5 cm. Thereby, efficient gas diffusion through the solid substrate with large honeycomb channels is achieved even in ventilated cable junction boxes with a high gas flow therein.

In an embodiment, the solid substrate is monolith. In certain embodiments, the solid substrate is ceramic monolith, such as ceramic monolith with the honeycomb structure.

In an embodiment, the metal-based catalyst comprises at least one catalytically active metal being platinum, and wherein the solid substrate is ceramic monolith, such as ceramic monolith with the honeycomb structure.

Preferred embodiments and further aspects are defined in the appended claims, listed embodiments and throughout the application text.

### Brief description of the drawings

The above and other aspects of the present invention will now be described in more detail, with reference to the appended figures. The figures are not necessarily to scale, and generally only show parts that are necessary in order to elucidate the inventive concept, wherein other parts may be omitted or merely suggested.
Fig. 1 illustrates a cross-section of a ventilated cable junction box comprising the catalyst according to the present disclosure around one or more cables, such as around the one or more cables before the ventilated cable box (Fig. 1A), or around the one or more cables inside the ventilated cable junction (Fig. 1B).
Fig. 2 illustrates a cross-section of the catalyst around a cable according to the present invention.
Fig. 3 illustrates a cross-section of a ventilated cable junction box comprising the catalyst according to the present disclosure inside the ventilated cable box, such as in the vicinity of one or more cables (Fig. 3A), in the vicinity of an outlet for exhaust gases (Fig. 3B), or in the outlet for exhaust gases (Fig. 3C).
Fig. 4 illustrates a cross-section of a ventilated cable junction box comprising the catalyst according to the present disclosure in an exhaust tube connected to an outlet for exhaust gases from the cable junction box.

### Detailed description

Cables are widely used to transmit electrical power or telecommunication signal from one place to another. Submarine cables play a crucial role in various underwater applications and they are widely used in industries ranging from telecommunications to off-shore energy production. There are more than 1.5 million kilometers of submarine cables in service globally. These underwater cables are designed to operate effectively in the demanding conditions of the marine environment, such as under conditions that can cause anchoring (mechanical stress), salt mist, water pressure, thermal stress, chemical corrosion, pressure fluctuations, temperature fluctuations, and exposure to harsh elements.

The main purpose of submarine cables is to transmit electrical signals. They can transmit power or data across vast stretches of lakes, seas, and/or oceans. Non-limiting examples of submarine cables include telecommunication cables, power transmission cables, and umbilical cables.

Submarine telecommunication cables carry telecommunication signals, which includes telephone, internet and private data traffic, across stretches of ocean and seas. Modern submarine telecommunication cables use optical fiber technology to carry signals. These cables are often 17-25 mm in diameter, and they are typically not larger than 60 mm in diameter.

Submarine power cables are widely used for power transmission, for example for new energy power systems in marine environments, such as off-shore wind, wave, and solar power transmission applications, and as a power supply to remote areas. Power cables are used for transmitting high electrical power (typically a few MW). They are generally rated at a medium voltage comprised between 6 kV and 35 kV, or at a high voltage above 35 kV, such as comprised between 35 kV and approximately 500 kV. High-voltage alternating current (HVAC) and high-voltage direct current (HVDC) are the main types of power transmissions by submarine cables. Currently, submarine cables with long distances and high voltage carry high electric power between countries and off-shore installations, such as oil/gas platforms and off-shore wind farms. These cables are usually larger in diameter than the submarine telecommunication cables, being at least 70 mm in diameters, and can often exceed 210 mm in diameter.

Submarine/subsea umbilical cables are typically used for transmitting power, signals and fluids (for example for fluid injection, hydraulic power, gas release, etc.) to and from a subsea installation. These cables typically comprise a group of one or more types of elongated functional elements, such as cables for power transmission, cables for transmitting signals, and optical fiber cables, and hoses for fluid transportation of, for example, gas, water or chemical products. These cables are often up to 25 mm in diameter.

Submarine cables typically comprise multiple layers, such as a layer of conductor materials, a layer of insulating and jacketing materials, and often a layer of armor and sheathing. Conductors are responsible for carrying electrical signals, electrical power and/or telecommunication signal from one end of the cable to the other. Submarine cables typically use copper or aluminum conductors, or optic fibers. Insulation and jacketing materials are crucial for protecting the conductor materials and maintaining signal strength. Submarine cables often use specialized materials like polyethene (PE) and cross-linked polyethene (XLPE) for insulation. In some submarine cable applications, additional layers of protection are required, such as cable armor typically made of galvanized steel wires, or sheathing materials made of polyethene or polypropylene. They help to serve as an extra barrier against moisture and environmental hazards.

As previously mentioned, one of the problems for underwater cables is the presence and migration of water and gas along the conductors of these cables. Water and gas may permeate through polymer sheaths and insulation layers of the cables and lead to their premature failure. Gas may also migrate towards the end of the cables and potentially create hazards, such as a loss of electrical insulation due to a pressure buildup at the end of the cables. A particularly problematic gas is hydrogen, which may be generated by galvanic corrosion of metal parts, magnetohydrodynamic effects, and/or microbial activity in the vicinity of the underwater cables. Hydrogen may permeate through the cable and cause optical loss (hydrogen darkening) in said cable. Additionally, any pressure buildup may lead to release of hydrogen into air. Hydrogen may spontaneously ignite when the level of hydrogen is equal or above 4 vol.% in air. Formation of such flammable gas mixtures may cause severe fires and explosions/detonations.

The design of the underwater cables has thus been very important, with a special focus on the insulation layers of the cables, cable fillings that may adsorb water and/or hydrogen in the cables, and preventing the pressure buildup at the ends of the cable. However, these solutions often neglect that gas may also migrate to facilities connected to the underwater cables, for example cable junction boxes, and resulting hazards. The cable junction boxes are often closed and thus safety issues associated with hydrogen accumulation and pressure buildup, as described above, may be expected. Even if the closed cable junction box is occasionally ventilated, the safety issues are still present, as hydrogen is allowed to accumulate in the junction box. Moreover, hydrogen may cause hydrogen darkening in cables within the junction box and, as hydrogen is an indirect greenhouse gas, its release into air leads to additional environmental hazards. Accordingly, there is a need for means, a method, and a system for controlling a level of gaseous hydrogen in or in connection to the cable junction box which would resolve the safety and environmental hazards associated with hydrogen therein.

The present invention thus provides, according to a first aspect, use of a metal-based catalyst supported on a solid substrate for controlling a level of gaseous hydrogen in or in connection to a ventilated cable junction box, wherein said gaseous hydrogen is removed by a hydrogen oxidation reaction catalyzed by said metal-based catalyst. The present invention provides several advantages, especially in view of a solution to occasionally ventilate the junction box, such as
- removal of hydrogen at low concentrations (at ppm levels) and therefore decreasing or preventing formation of flammable gas mixtures in or in connection to the ventilated cable junction box;
- removal of hydrogen at low concentrations with limited and low heat generation and therefore decreasing risk of ignition of hydrogen in or in connection to the ventilated junction box;
- removal of hydrogen in the junction box at an atmospheric pressure and therefore decreasing or preventing any pressure buildup therein;
- conversion of hydrogen to water which is safe to release into air and therefore decreases or eliminates release of hydrogen into the atmosphere.

Therefore, the present invention enables controlling a level of gaseous hydrogen in or in connection to the cable junction box which resolves the safety and environmental hazards associated with hydrogen accumulation in the junction box and its release.

The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

As used herein, a cable junction box refers to an enclosure housing electrical connections, and it is connected to one or more cables, such as high-voltage cables. The cables may be partially or fully underwater. The cables that are underwater are herein referred to as "underwater cables", "submarine cables" or "subsea cables". The cable junction box may be at an off-shore location or an on-shore location. The cable junction box is ventilated according to the present invention. This implies that oxygen is present within the cable junction box. Moreover, by ventilating said cable junction box is an open system at an atmospheric pressure and pressure buildup therein is decreased or eliminated. The metal-based catalyst may be arranged around the cables, within the cable junction box, and/or in an exhaust tube connected to the cable junction box.

As used herein, a catalyst refers to a substance that catalyzes/promotes a reaction, i.e., increases the rate of a reaction without modifying the overall standard

Gibbs energy change in the reaction. This process is called catalysis. Catalysis can be classified as homogeneous catalysis, in which only one phase is involved by having the catalyst of the same phase as the reactants and/or products of the reaction, and heterogeneous catalysis, in which the reaction occurs at or near an interface between phases when the catalyst is of a different phase that the reactants and/or products of the reaction.

As used herein, a metal-based catalyst refers to a catalyst comprising a metal, such as a transition metal, or a compound of said metal, such as an oxide and/or an alloy of said metal, or their combination.

A transition metal, as used herein, refers to a chemical element in the d-block of the periodic table (groups 3 to 12). The corresponding oxide is referred to as "transition metal oxide". A selection of the transition metals is herein referred to as "noble transition metals" or "noble metals", and it comprises at least platinum, palladium, rhodium, iridium, ruthenium, osmium, gold, silver. The remaining transition metals are herein referred to as "non-noble transition metals". The respective oxides are referred to as "noble metal oxides" or "noble transition metal oxides", and "non-noble transition metal oxides", respectively.

The metal and/or its compound herein catalyzes a reaction between hydrogen and oxygen to produce water. This reaction is herein referred to as "a hydrogen oxidation reaction". The terms "hydrogen recombination" or "hydrogen recombination reaction" may also be used for this reaction. As the metal-based catalyst is typically solid, and hydrogen is a gas, the catalysis in this case is heterogeneous. Useful amounts of catalytic materials, i.e., catalytic metal(s) and/or its compound(s), are easily determined by a skilled person.

The metal-based catalyst used to catalyze the hydrogen oxidation reaction may thus comprise a catalytically active metal, which may be selected from one or more of transition metals, such as from one or more noble metals, one or more non-noble transition metals, and a combination thereof. The catalytically active metal may be selected from one or more of platinum, palladium, rhodium, iridium, ruthenium, osmium, gold, silver, and the at least one catalytically active non-noble transition metal may be selected from one or more of nickel, aluminum, cobalt, copper, cadmium, cerium, vanadium, and chromium. The catalytically active metal may be selected from platinum, palladium, or a combination thereof. In a preferred embodiment, the catalytically active metal may be platinum.

The metal-based catalyst may also comprise a compound of any previously-mentioned transition metal, or a combination of the compound with the one or more of the transition metals. In this case, said compound or said combination will be the catalytically active material and thus catalyze the hydrogen oxidation reaction.

The compound may be selected from one or more of transition metal oxides, such as from one or more noble metal oxides, one or more non-noble transition metal oxides, and a combination thereof. The compound may also be selected from one or more alloys of a transition metal, such as from one or more alloys of a noble metal, one or more alloys of a non-noble transition metal, and a combination thereof.

The present invention may also enable removal of hydrogen in or in the connection of the ventilated cable junction box even in the presence of hydrocarbons, such as during a gas leak on a platform. The skilled person may then preferably choose a less active metal-based catalyst, i.e., a metal-based catalyst that will have a lower catalytic reaction rate, and/or the skilled person may lower the amount of catalytic materials, such that the metal-based catalyst targets highly active hydrogen, even if hydrogen is at low concentrations. Removing hydrogen at a controlled rate in this situation may decrease or prevent formation of a very flammable mixture of hydrogen and a hydrocarbon, such as methane, with a limited generation of heat.

The metal-based catalyst of the present disclosure is supported on a solid substrate. As used herein, a solid substrate refers to a material, usually a material with a large surface area, which is coated with the catalyst or to which the catalyst is affixed. The terms "catalyst support" or "catalyst carrier" may also be used. Methods of coating/affixing the metal-based catalyst on the solid substrate may be, for example, by spraying, suspension, impregnation and/or deposition of the catalytic materials on the solid substrate. The solid substrate may have a porous structure, a honeycomb structure, or a combination thereof. When the solid substrate has a honeycomb structure, the honeycomb structure may have channels and they should be large enough to allow efficient gas diffusion through the solid substrate which may e.g. be coated with the metal-based catalyst. The diameter of said channels may be below or equal to 0.5 cm and these channels may be used in ventilation boxes with a lower gas flow therein. The diameter of said channels may be equal or above to 0.5 cm, and these channels may be used in ventilation boxes with a high gas flow therein.

The solid substrate may be selected from one or more of monolith, such as ceramic monolith or metallic monolith, zeolite, carbon, such as activated charcoal or graphite, alumina, silica. In a preferred embodiment, the solid substrate may be monolith. Ceramic monolith may be preferred over metallic monolith, as ceramic monolith has a lower heat/thermal conductivity than metallic monolith. Thereby, any heat generated in the catalytic reaction may not as easily be transferred to other parts of the substrate and thereby to adjacent or remote parts of the catalytic materials or to parts of the ventilation junction box, such as to one or more cables therein. As the amount of heat is small due to hydrogen being at ppm levels, the substrate may be cooled down by the stream of air in the ventilated junction box.

Additionally or alternatively, the metal-based catalyst may be supported on one or more surfaces of a ventilated cable junction box and/or an exhaust tube connected to an outlet for exhaust gases from the ventilated cable junction box, i.e. on one or more inner surfaces/walls of the ventilated cable junction box and/or on one or more inner surfaces/walls of the exhaust tube. Said surfaces/walls are then the solid substrate for the metal-based catalyst in these embodiments. The metal-based catalyst may be a thin layer of the catalytic materials supported on the one or more of said surfaces. The thin layer of the catalytic material may be, for example, sprayed on the one or more of said surfaces.

According to a second aspect, the present invention provides a method of controlling a level of gaseous hydrogen in or in connection to a ventilated cable junction box, comprising a step of removing said gaseous hydrogen by a hydrogen oxidation reaction catalyzed by a metal-based catalyst supported on a solid substrate. The method thus uses the metal-based catalyst supported on the solid substrate for controlling a level of gaseous hydrogen in or in connection to a ventilated cable junction box according to the first aspect of this invention. The method also benefits from all previously-described advantages of the first aspect of the invention.

According to a third aspect, the present invention provides a system for controlling a level of gaseous hydrogen in or in connection to a ventilated cable junction box, wherein said system comprises the ventilation cable junction box and a metal-based catalyst supported on a solid substrate, wherein said ventilated cable junction box is connected to one or more cables, and wherein the metal-based catalyst is arranged in one or more of the following:
i) around the one or more cables,
ii) within the cable junction box, such as in the vicinity of the one or more cables, and/or in the vicinity of at least one outlet for exhaust gases, and/or in the at least outlet for exhaust gases, and
iii) in at least one exhaust tube connected to the at least one outlet for exhaust gases from the cable junction box.

The system comprises the metal-based catalyst supported on the solid substrate. The metal-based catalyst supported on the solid substrate may be used according to the first aspect of this invention in this system. The system may thus also benefit from all previously-described advantages of the first aspect of the invention. The system may also used to perform the method according to the second aspect of this invention.

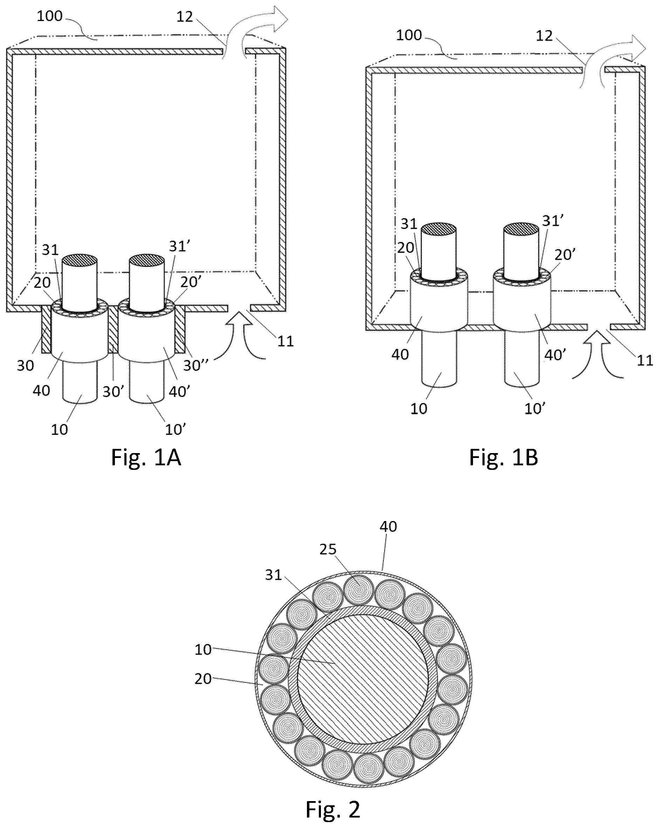

The invention will now be described in more detail referring to Fig. 1-4. Said figures illustrate non-limiting examples of design of the system according to the present invention.

Fig. 1 illustrates embodiments in which a catalyst according to the present invention is arranged around one or more cables, while Fig. 2 illustrates how the catalyst is arranged in some of the embodiments of Fig. 1.

Fig. 1A illustrates an embodiment in which the metal-based catalyst is arranged around one or more cables outside/before a ventilated cable junction box. The ventilated junction box 100 is connected to two cables 10, 10'. This system further comprises an inlet for air 11, an outlet for air/exhaust gases 12, and catalyst layers 20, 20' for removing hydrogen around each of the cables 10, 10'. In certain embodiments, as shown in Fig. 1A, the system further comprises a first heat insulation layer 31, 31' between the catalyst layers 20, 20' and the cables 10, 10'. The first heat insulation 31, 31' prevents potential heating of the cables 10, 10' by heat from the catalytic reaction. This system may also further comprise outer shells 40, 40' which surround each of the catalyst layers 20, 20', and a second heat insulation layer 30, 30', 30'' surrounding the outer shells 40, 40'of each catalyst layer 20, 20'. The second heat insulation layer 30, 30', 30'' prevents heat transfer between the catalyst layers 20, 20' of the adjacent cables 10, 10'. The flow of air in the ventilated cable junction box is illustrated with arrows.

Fig. 1B illustrates an embodiment in which the metal-based catalyst is arranged around one or more cables inside a ventilated cable junction box. The ventilated junction box 100 is again connected to two cables 10, 10'. This system further comprises an inlet for air 11, an outlet for air/exhaust gases 12, and catalyst layers 20, 20' for removing hydrogen around each of the cables 10, 10'. In certain embodiments, as shown in Fig. 1B, the system further comprises a first heat insulation layer 31, 31' between the catalyst layers 20, 20' and the cables 10, 10', and a outer shell 40, 40' surrounding each of the catalyst layers 20, 20'. The flow of air in the ventilated cable junction box is illustrated with arrows. The second heat insulation layer 30, 30', 30'' from the previous embodiment is not needed in this embodiment, as the cables 10, 10' are further apart than in Fig. 1A and there is no risk or there is only a minimal risk of heat transfer between the catalyst layers 20, 20' of the adjacent cables 10, 10'. If the cables are further apart and/or if there is no or only a minimal risk of heat transfer between the catalyst layers, the second heat insulation layer 30, 30', 30'' can be also removed in the embodiment represented by Fig. 1A.

Fig. 2 illustrates the catalyst according to the present invention in certain embodiments shown in Fig. 1. This figure shows a cross-section of the cable 10 surrounded by the catalyst layer 20. Between the cable 10 and the catalyst layer 20 there is the first heat insulation layer 31, which prevents potential heating of the cable 10 by heat from the catalytic reaction. The catalyst layer 20 comprises a plurality of supported metal catalysts 25 according to the present invention. Each metal catalyst is supported on a solid substrate, wherein said solid substrate is porous or has channels therein, such that gases can diffuse through to the metal catalyst. There is also the outer shell 40 which holds the plurality of supported metal catalysts 25 around the cable 10.

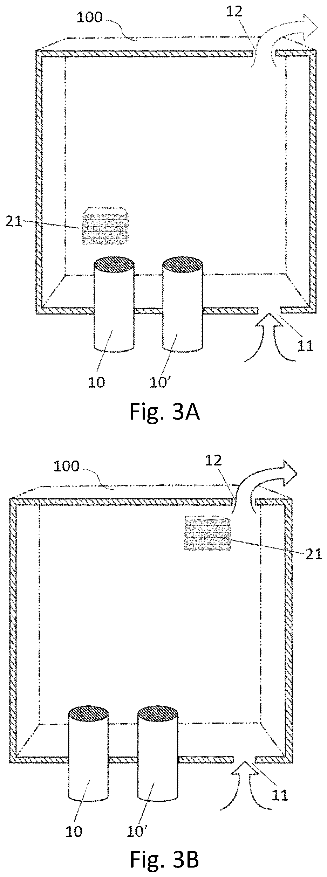

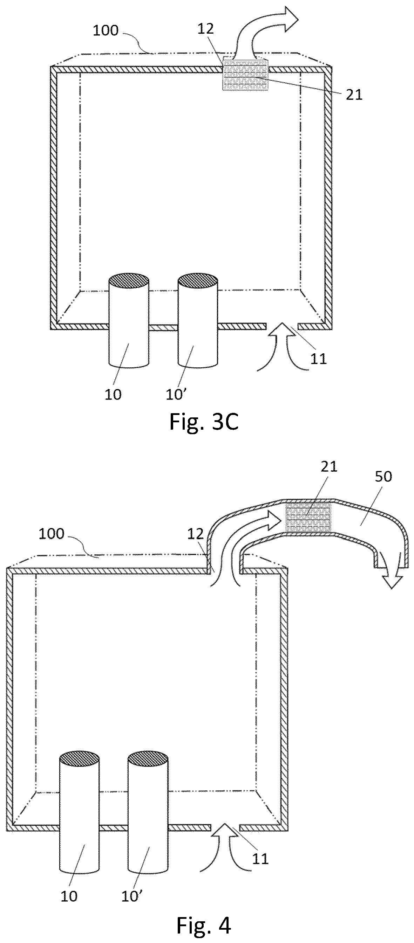

Fig. 3 illustrates embodiments in which a catalyst according to the present invention is arranged within a ventilated junction box. On these figures the ventilated junction box 100 is connected to two cables 10, 10', and it comprises an inlet for air 11, an outlet for air/exhaust gases 12, and a catalyst 21 for removing hydrogen. The flow of air in the ventilated cable junction box is illustrated with arrows. The catalyst 21 is arranged in the vicinity of the cables 10, 10' in Fig. 3A, in the vicinity of the outlet 12 in Fig. 3B, and in the outlet 12 in Fig. 3C. The catalyst 21 comprises catalytic materials supported on a solid substrate, and in Fig. 3 it is illustrated as a cube comprising many channels which are coated with the catalytic materials according to the present invention.

Fig. 4 illustrates an embodiment where the catalyst according to the present disclosure is arranged in an exhaust tube connected to an outlet for exhaust gases from a ventilated cable junction box. The ventilated junction box 100 is again connected to two cables 10, 10', and it comprises an inlet for air 11, an outlet for air/exhaust gases 12, an exhaust tube 50 connected to the outlet 12, and a catalyst 21 for removing hydrogen. The catalyst 21 is in the exhaust tube 50. The catalyst 21 is herein also illustrated as a cube comprising many channels which are coated with the catalytic materials according to the present invention. The flow of air in the ventilated cable junction box is illustrated with arrows.

In all embodiments, such as the embodiments in Fig. 1, 3 and 4, the inlet for air 11 may be substituted with a fan placed inside the cable junction box. The fan will then create a gas flow in the junction box. Alternatively, the fan may be placed in the cable junction box in addition to the inlet for air 11. Furthermore, any of the embodiments shown in Fig. 1 and 3 may further comprise an exhaust tube 50, and any of the embodiments shown in Fig. 1, 3 and 4 may comprise heat insulation layers or further heat insulation layers.

The catalyst 21 in Fig. 3 and 4 is illustrated as a cube comprising many channels which are coated with the catalytic materials. However, other shapes and designs of the catalyst 21 are feasible in view of the present disclosure. For example, the catalyst 21 may be a thin layer of the catalytic materials supported on one or more surfaces of the ventilated cable junction box 100 and/or the exhaust tube 50.

In the drawings and specification, there have been disclosed example aspects of the disclosure. However, many variations and modifications can be made to these aspects without substantially departing from the principles of the present disclosure. Thus, the disclosure should be regarded as illustrative rather than restrictive, and not as being limited to the particular aspects discussed above. Accordingly, although specific terms are employed, they are used in a generic and descriptive sense only and not for purposes of limitation.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of processes, products, and systems. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, and that the example embodiments may be realized in the broadest sense of the claims.

### Itemized list of embodiments

1. Use of a metal-based catalyst supported on a solid substrate for controlling a level of gaseous hydrogen in or in connection to a ventilated cable junction box, wherein said gaseous hydrogen is removed by a hydrogen oxidation reaction catalyzed by said metal-based catalyst.
2. The use according to item 1, wherein the level of gaseous hydrogen is controlled below 1000 ppm.
3. The use according to item 1 or 2, wherein the cable junction box is connected to one or more cables, such as high-voltage cables, wherein at least one of said cables is partially or fully underwater.
4. The use according to any one of items 1 to 3, wherein the cable junction box is at an off-shore location, such as an off-shore oil platform or an off-shore wind turbine.
5. The use according to any one of items 1 to 4, wherein the cable junction box is at atmospheric pressure and at an ambient temperature, such as between 0 and 30 degrees Celsius.
6. The use according to any one of items 1 to 5, wherein the metal-based catalyst is arranged in one or more of the following:
   i) around the one or more cables,
   ii) within the cable junction box, such as in the vicinity of the one or more cables, and/or in the vicinity of at least one outlet for exhaust gases, and/or in the at least one outlet for exhaust gases, and
   iii) in at least one exhaust tube connected to the at least one outlet for exhaust gases from the cable junction box.
7. The use according to any one of items 1 to 6, wherein the metal-based catalyst comprises at least one catalytically active metal, a compound thereof, or a combination thereof.
8. The use according to item 7, wherein the compound is selected from an oxide of the at least one catalytically active metal, an alloy of the at least one catalytically active metal, and a combination thereof.
9. The use according to item 7 or 8, wherein the at least one catalytically active metal is selected from at least one catalytically active noble metal, at least one catalytically active non-noble transition metal, and a combination thereof.
10. The use according to item 9, wherein the at least one catalytically active noble metal is selected from one or more of platinum, palladium, rhodium, iridium, ruthenium, osmium, gold, silver, such as from platinum, palladium, or a combination thereof, and wherein the at least one catalytically active non-noble transition metal is selected from one or more of nickel, aluminum, cobalt, copper, cadmium, cerium, vanadium, and chromium.
11. The use according to any one of items 1 to 10, wherein the solid substrate has a porous structure, a honeycomb structure, or a combination thereof.
12. The use according to any one of items 1 to 11, wherein the solid substrate is selected from monolith, such as ceramic monolith or metallic monolith, zeolite, carbon, such as activated charcoal or graphite, alumina, silica, or a combination thereof.
13. The use according to any one of items 1 to 12, wherein the metal-based catalyst comprises at least one catalytically active metal being platinum, and wherein the solid substrate is ceramic monolith.
14. A method of controlling a level of gaseous hydrogen in or in connection to a ventilated cable junction box, comprising a step of removing said gaseous hydrogen by a hydrogen oxidation reaction catalyzed by a metal-based catalyst supported on a solid substrate.
15. The method according to item 14, wherein the level of gaseous hydrogen is controlled below 1000 ppm.
16. The method according to item 14 or 15, wherein the cable junction box is connected to one or more cables, such as high-voltage cables, wherein at least one of said cables is partially or fully underwater.
17. The method according to any one of items 14 to 16, wherein the cable junction box is at an off-shore location, such as an off-shore oil platform or an off-shore wind turbine.
18. The method according to any one of items 14 to 17, wherein the cable junction box is at atmospheric pressure and at an ambient temperature, such as between 0 and 30 degrees Celsius.
19. The method according to any one of items 14 to 18, wherein the metal-based catalyst is arranged in one or more of the following:
   i) around the one or more cables,
   ii) within the cable junction box, such as in the vicinity of the one or more cables, and/or in the vicinity of at least one outlet for exhaust gases, and/or in the at least one outlet for exhaust gases, and
   iii) in at least one exhaust tube connected to the at least one outlet for exhaust gases from the cable junction box.
20. The method according to any one of items 14 to 19, wherein the metal-based catalyst comprises at least one catalytically active metal, a compound thereof, or a combination thereof.
21. The method according to item 20, wherein the compound is selected from an oxide of the at least one catalytically active metal, an alloy of the at least one catalytically active metal, and a combination thereof.
22. The method according to item 20 or 21, wherein the at least one catalytically active metal is selected from at least one catalytically active noble metal, at least one catalytically active non-noble transition metal, and a combination thereof.
23. The method according to item 22, wherein the at least one catalytically active noble metal is selected from one or more of platinum, palladium, rhodium, iridium, ruthenium, osmium, gold, silver, such as from platinum, palladium, or a combination thereof, and wherein the at least one catalytically active non-noble transition metal is selected from one or more of nickel, aluminum, cobalt, copper, cadmium, cerium, vanadium, and chromium.
24. The method according to any one of items 14 to 23, wherein the solid substrate has a porous structure, a honeycomb structure, or a combination thereof.
25. The method according to any one of items 14 to 24, wherein the solid substrate is selected from monolith, such as ceramic monolith or metallic monolith, zeolite, carbon, such as activated charcoal or graphite, alumina, silica, or a combination thereof.
26. The method according to any one of items 14 to 25, wherein the metal-based catalyst comprises at least one catalytically active metal being platinum, and wherein the solid substrate is ceramic monolith.
27. A system for controlling a level of gaseous hydrogen in or in connection to a ventilated cable junction box, wherein said system comprises the ventilation cable junction box and a metal-based catalyst supported on a solid substrate, wherein said ventilated cable junction box is connected to one or more cables, and wherein the metal-based catalyst is arranged in one or more of the following:
   i) around the one or more cables,
   ii) within the cable junction box, such as in the vicinity of the one or more cables, and/or in the vicinity of at least one outlet for exhaust gases, and/or in the at least outlet for exhaust gases, and
   iii) in at least one exhaust tube connected to the at least one outlet for exhaust gases from the cable junction box.
28. The system according to item 27, wherein said gaseous hydrogen is removed by a hydrogen oxidation reaction catalyzed by said metal-based catalyst.
29. The system according to item 27 or 28, wherein the level of gaseous hydrogen is controlled below 1000 ppm.
30. The system according to any one of items 27 to 29, wherein the cable junction box is connected to one or more cables, such as high-voltage cables, wherein at least one of said cables is partially or fully underwater.
31. The system according to any one of items 27 to 30, wherein the cable junction box is at an off-shore location, such as an off-shore oil platform or an off-shore wind turbine.
32. The system according to any one of items 27 to 31, wherein the cable junction box is at atmospheric pressure and at an ambient temperature, such as between 0 and 30 degrees Celsius.
33. The system according to any one of items 27 to 32, wherein the metal-based catalyst comprises at least one catalytically active metal, a compound thereof, or a combination thereof.
34. The system according to item 33, wherein the compound is selected from an oxide of the at least one catalytically active metal, an alloy of the at least one catalytically active metal, and a combination thereof.
35. The system according to item 33 or 34, wherein the at least one catalytically active metal is selected from at least one catalytically active noble metal, at least one catalytically active non-noble transition metal, and a combination thereof.
36. The system according to item 35, wherein the at least one catalytically active noble metal is selected from one or more of platinum, palladium, rhodium, iridium, ruthenium, osmium, gold, silver, such as from platinum, palladium, or a combination thereof, and wherein the at least one catalytically active non-noble transition metal is selected from one or more of nickel, aluminum, cobalt, copper, cadmium, cerium, vanadium, and chromium.
37. The system according to any one of items 27 to 36, wherein the solid substrate has a porous structure, a honeycomb structure, or a combination thereof.
38. The system according to any one of items 27 to 37, wherein the solid substrate is selected from monolith, such as ceramic monolith or metallic monolith, zeolite, carbon, such as activated charcoal or graphite, alumina, silica, or a combination thereof.
39. The system according to any one of items 27 to 38, wherein the metal-based catalyst comprises at least one catalytically active metal being platinum, and wherein the solid substrate is ceramic monolith.

## Claims

1. Use of a metal-based catalyst supported on a solid substrate for controlling a level of gaseous hydrogen in or in connection to a ventilated cable junction box, wherein said gaseous hydrogen is removed by a hydrogen oxidation reaction catalyzed by said metal-based catalyst.

2. The use according to claim 1, wherein the level of gaseous hydrogen is controlled below 1000 ppm.

3. The use according to claim 1 or 2, wherein the cable junction box is connected to one or more cables, such as high-voltage cables, wherein at least one of said cables is partially or fully underwater.

4. The use according to any one of claims 1 to 3, wherein the cable junction box is at an off-shore location, such as an off-shore oil platform or an off-shore wind turbine.

5. The use according to any one of claims 1 to 4, wherein the cable junction box is at atmospheric pressure and at an ambient temperature, such as between 0 and 30 degrees Celsius.

6. The use according to any one of claims 1 to 5, wherein the metal-based catalyst is arranged in one or more of the following:
i) around the one or more cables,
ii) within the cable junction box, such as in the vicinity of the one or more cables, and/or in the vicinity of at least one outlet for exhaust gases, and/or in the at least one outlet for exhaust gases, and
iii) in at least one exhaust tube connected to the at least one outlet for exhaust gases from the cable junction box.

7. The use according to any one of claims 1 to 6, wherein the metal-based catalyst comprises at least one catalytically active metal, a compound thereof, or a combination thereof.

8. The use according to claim 7, wherein the compound is selected from an oxide of the at least one catalytically active metal, an alloy of the at least one catalytically active metal, and a combination thereof.

9. The use according to claim 7 or 8, wherein the at least one catalytically active metal is selected from at least one catalytically active noble metal, at least one catalytically active non-noble transition metal, and a combination thereof.

10. The use according to claim 9, wherein the at least one catalytically active noble metal is selected from one or more of platinum, palladium, rhodium, iridium, ruthenium, osmium, gold, silver, such as from platinum, palladium, or a combination thereof, and wherein the at least one catalytically active non-noble transition metal is selected from one or more of nickel, aluminum, cobalt, copper, cadmium, cerium, vanadium, and chromium.

11. The use according to any one of claims 1 to 10, wherein the solid substrate has a porous structure, a honeycomb structure, or a combination thereof.

12. The use according to any one of claims 1 to 11, wherein the solid substrate is selected from monolith, such as ceramic monolith or metallic monolith, zeolite, carbon, such as activated charcoal or graphite, alumina, silica, or a combination thereof.

13. The use according to any one of claims 1 to 12, wherein the metal-based catalyst comprises at least one catalytically active metal being platinum, and wherein the solid substrate is ceramic monolith.

14. A method of controlling a level of gaseous hydrogen in or in connection to a ventilated cable junction box, comprising a step of removing said gaseous hydrogen by a hydrogen oxidation reaction catalyzed by a metal-based catalyst supported on a solid substrate.

15. A system for controlling a level of gaseous hydrogen in or in connection to a ventilated cable junction box, wherein said system comprises the ventilation cable junction box and a metal-based catalyst supported on a solid substrate, wherein said ventilated cable junction box is connected to one or more cables, and wherein the metal-based catalyst is arranged in one or more of the following:
i) around the one or more cables,
ii) within the cable junction box, such as in the vicinity of the one or more cables, and/or in the vicinity of at least one outlet for exhaust gases, and/or in the at least outlet for exhaust gases, and
iii) in at least one exhaust tube connected to the at least one outlet for exhaust gases from the cable junction box.
